# EUROPEAN PATENT SPECIFICATION

(11) **EP 1 955 518 B1**
(45) Date of publication and mention of the grant of the patent: **07.02.2018**
(21) Application number: 06847286.9
(22) Date of filing: 01.12.2006
(51) Int. Cl.: H04L 29/06, H04N 7/173, H04N 5/00

(54) **NETWORK BASED INSTANT REPLAY AND TIME SHIFTED PLAYBACK**
NETZBASIERTE SOFORT-WIEDERHOLUNG UND ZEITVERSCHOBENE WIEDERGABE
REPRISE INSTANTANEE ET LECTURE DIFFEREE PAR RESEAU

(30) Priority: 02.12.2005 US 292345
(43) Date of publication of application: 13.08.2008
(73) Proprietor: ALCATEL LUCENT, 92100 Boulogne-Billancourt (FR)
(72) Inventor: PAEKER, Alistair, John, Edmonton, Alberta T5T 3L7 (CA); FURLONG, Jeff, Grand Bay-Westfield, New Brunswick E5K 1S7 (CA); DION, Gino, Louis, McKinney, TX 75070 (US); HIGGINS, Sean, Gordon, Saint John, New Brunswick E2K 5K1 (CA)
(74) Representative: Wetzel, Emmanuelle
(86) International application number: PCT/IB2006/004063
(87) International publication number: WO 2007/063430

(56) References cited:
- EP-A- 1 185 095
- WO-A-2004/073306
- US-A1- 2001 047 516
- US-A1- 2005 146 990

## Description

### Field of the invention

The invention is directed to communication networks and in particular to a multimedia delivery system with instant replay and time-shifted playback.

### Background of the Invention

Systems for delivering broadcast television over the Internet Protocol are emerging, along with new services that enhance and diversify the entertainment experience of subscribers to such systems. Generally, a broadcast provider obtains multimedia signals (e.g. TV signals) from traditional sources such as satellite or cable and encodes the signals for delivery to subscribers over an IP enabled broadband network. Subscribers enabled with television sets and set top boxes (STB) or PCs are fitted with appropriate software to decode the respective IP format for program viewing. An interactive electronic program guide, viewable on the subscriber's monitor or TV, provides access to a range of viewing features and system management functions.

Currently, program delivery and the services available to the subscribers are at the convenience of the service provider or broadcaster and, hence, the subscriber must arrange his/ her schedule to coincide with program availability. On the other hand, because of the proliferation of broadband backbone and delivery networks, emergence of specialty services (such as pay per view and first run movies), and increase in usage of PCs by consumers, an increasing demand is evolving for on-demand multimedia services. These services enable consumers to plan their entertainment to their own schedule and interests rather than tailor their entertainment viewing habits to a service provider's broadcast schedule.

The service providers use unicast and multicast protocols to deliver their services to subscribers. Multicast protocols are used for conventional TV programming and near video on demand (NVOD) movie selections, as they enable numerous subscribers to have access to a program at the same time. Unicast IP protocols are preferably used for true video-on-demand services such as VOD, VDVR, timelessTV and TV-on-Demand.

Currently, subscribers viewing a multicast stream cannot freely interrupt the stream to review content previously delivered, because there are other viewers joined to the same transport stream. Subscribers must actively store and manage the broadcast content for the purposes of instant-replay and time-shifted playback. In recent years, one popular approach to offer some form of VCR-like interactivity is to add a storage unit to the subscriber equipment so as to cache all the available content being broadcast. Many time-shifted systems that exist today are based on having the clients record in real-time a channel of interest; only by this means can the content be played back.

For example, TiVo™ set top boxes (STB) available today function similarly to VCRs, but use non-removable hard-disk storage, and contain sophisticated software to record programs-not only those the user specifically requests, but also other material the user is likely to be interested in. Programs being watched "live" can be paused or "rewound" to repeat a sequence just watched. A TiVo digital video recorder (DVR) allows a user to specify which programs to record by time, by program title, and by specifying combinations of genre, actors, directors, etc. Programs may be stored until internal storage is filled, at which time the unit will dispose of older programs (unless flagged to be saved until manually deleted), to allow for new programs to be recorded.

However, standalone TiVo systems can only record one channel at a time. In addition, "time-shifted playback" in order to view/review a certain past content, can be performed only for the channels currently viewed. Furthermore, TiVo requires special hardware (hard drive) in the STB to enable this feature, which is costly, and suffers from operational problems like storage unit failure and management.

For example, US Patent Application Publication # 20030170003 entitled "Time-Shifted Video Signal Processing" (Levesque et al.) describes a time-shifted playback method where real-time video frames are delivered for display during a real-time mode, and time-shifted video frames are delivered for display during a time-shifted mode. The time-shifted video frames are delayed relative to the real-time video frames. A real-time frame is paused during a transition from the real-time mode to the time-shifted mode. This method enables a client-side implementation of trick play and instant replay.

Most "time-shifted" viewing offered by digital providers is purely based on TV networks broadcasting in different time-zones, letting you watch e.g. the 18:00 clock news in Vancouver at the 21:00 Toronto time.

There are also some entertainment delivery systems that use network storage devices for providing instant-replay and time-shifted playback, as described in e.g. US Patent Application Publication # 20040254999 entitled "System For Providing Content To Multiple Users" (Bulleit et al). The delivery system described by Bulleit et al. comprises a grid computing platform, which provides storage of the content across network storage devices and consumer storage devices. The grid computing platform monitors distribution of the content to one or more of the consumer networks and determines when and where to store non-real time video. Processor-based network element(s) determine, based on customer preference, customer viewing habits or other factors, when to store a video program on the consumer storage device and where to store content that is not resident on the user's local consumer storage device. This is a very complex system and as such is prone to errors and expensive.

An example of a combination of network DVR and download VOD is presented in the US Patent 6,611,654 entitled "Time- and location-driven personalized TV" (Shteyn). This patent describes a server system that enables a subscriber to select a specific broadcast program for recording and a specific location and time frame for play-out of the recorded program. In one embodiment, the content information can be recorded at a first recording system, e.g., at a server. The selected content information recorded on the recording system can then be streamed over a data network, e.g., over the Internet or a private network like AOL to a location specified by the user. Alternatively, or subsidiarily, a program can be recorded and stored temporarily at a server and then streamed over a data network, e.g., the Internet, using a low-bandwidth protocol, to a recording device specified by the user as destination. Accordingly, the Shteyn's system attempts to contribute to the user's needs by means of enabling shifting of recording and play-out locations, in addition to the time-shifting provided by the known services. The main disadvantage of this system is that it provides an arbitrarily delayed and location-independent experience.

There is a need to enable a subscriber with additional services such as instant replay and time shifted playback that is controllable by the user, does not require expensive subscriber terminals and provides an inexpensive and reliable network solution.

WO 2004073306 discloses an apparatus for storing broadcast programmes for future transmission to subscribers comprising means for receiving a broadcast channel data stream which comprises a plurality of sequential programmes and, a data storage means, wherein, video and audio data relating to each programme are extracted from a received broadcast channel data stream and stored on the data storage means at a known position, service information relating to each programme is extracted from the data stream and stored at a known position on the data storage means with data identifying the position on the storage means at which the corresponding video and audio data for the programme are stored. Other prior art media delivery systems and methods are known from for example US 2005/0146990 A1, US2002/0124258 A1 and WO2004/052011.

### Summary of the Invention

The invention is defined in independent claim 1, related to a video delivery server, and in independent method claim 11. It is an object of the invention to provide a simple method for providing a time-shifted view of a live audio/video stream for the purpose of instant-replay review and short-term time-shifting. The implementation of this simple mechanism is transparent to the end-user unless invoked, implying no additional hardware cost or complexity at the STB.

Accordingly, the invention provides, a time-shift unit for a video delivery server for distributing multimedia content streams to a plurality of subscriber premise equipment (SPE) units, where SPE units select and join multimedia content streams using interactive program guide capabilities at the server. The time-shift unit comprises a circular buffer for storing multimedia content received in a live multimedia content stream; a first sender for bypassing the circular buffer and multicasting the live multimedia content stream directly to the SPE units; and a second sender for accessing the multimedia content from a specific position in the circular buffer, and multicasting a time-shifted variant of the live multimedia content stream to the SPE units, wherein the specific position in the circular buffer confers a predetermined time-shift for the variant of the live multimedia content stream with respect to the live multimedia content stream.

Further, the invention also provides the video server with an instant replay unit comprising: a replay buffer for storing a length T of multimedia content; an instant replay controller for receiving an instant replay request from the SPE unit, taking a snapshot copy of length T of the multimedia content from the circular buffer to the replay buffer and directing a pointer associated with the SPE unit to the replay buffer; and a sender associated with the replay buffer for transmitting the snapshot copy to the SPE unit from the replay buffer.

The invention also provides a for distributing multimedia content streams to a plurality of subscriber premise equipment (SPE) units, where SPE units select and join multimedia content streams using interactive program guide capabilities at the server, comprising: continuously storing multimedia content received in a live multimedia content stream into a circular buffer; identifying a specific access point in the circular buffer that provides a predetermined time-shift of multimedia content in the circular buffer from the access point of multimedia content in the live multimedia content stream; and accessing the multimedia content from the specific offset in the circular buffer, and multicasting a time-shifted variant of the live multimedia content stream to the SPE units from the specific access point.

The method of distributing multimedia content streams further comprises: providing a plurality of replay buffers of various lengths Tn; receiving an instant replay request from the SPE unit, wherein the instant replay specifies a length T for instant replay of selected content of interest; identifying a certain replay buffer from the plurality of replay buffers that can store content of the length T; taking a snapshot copy of length T of the multimedia content from the circular buffer to the certain replay buffer and directing a pointer associated with the SPE unit to the certain replay buffer; and transmitting the instant replay content of interest to the SPE unit.

Instant replay and time-shifted playback would likely be considered as mandatory features for IPTV users. Advantageously, the invention provides a network implementation of instant-replay and time-shifted playback, while enabling the subscriber with a VCR-like functionality for any multimedia (TV) broadcast program. This enables reduced complexity in the equipment located at the subscriber premises, since the STB will need less memory. Therefore the present solution enables implementing these additional features more cost-effectively in the network compared to traditional client-side implementations.

Since it is implemented in the network, the system according to the invention permits real-time statistical reporting so that the service providers can further adapt their offerings to subscribers' needs. In addition, the system is client-agnostic, in that it does not require any special custom hardware and only minimal software changes.

### Brief Description of the drawings

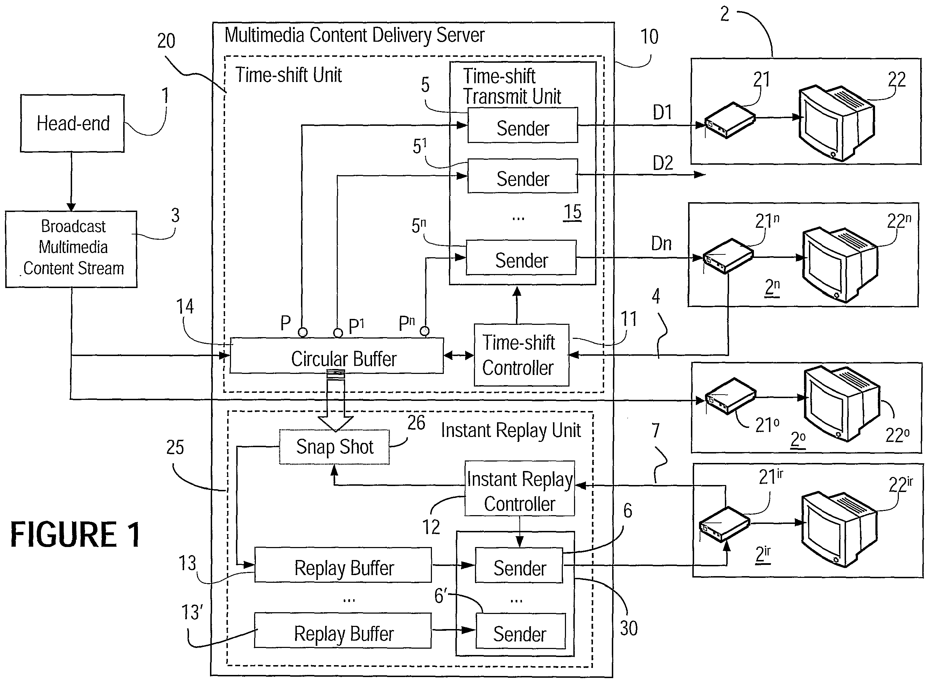

The foregoing and other objects, features and advantages of the invention will be apparent from the following more particular description of the preferred embodiments, as illustrated in the appended drawing Figure 1, which illustrates mapping between services, network infrastructure and functionality.

### Detailed Description

Definition of some terms is provided for better understanding the invention. The term "instant replay" refers to a feature that enables a viewer of a TV program/channel to jump back in time by a few seconds (8-10seconds), and resume viewing of the respective channels from that point in time. The term "time-shifted playback" refers to a feature that enables a viewer to switch from one version of the TV signal to another version which is delayed or ahead of the previous version by a specified amount of time. This can be used to effectively rewind the signal when real-time viewing is interrupted (e.g. whilst speaking on the phone, or while answering the door) and to fast-forward the signal subsequently. The term "trick play" refers to using controls such as pause, instant replay, rewind, fast forward, slow, skip to end, while watching live TV.

The term "multimedia content" is used here to designate units of information (packets, frames, etc) transported by the multimedia content streams according to the respective transport protocol.

Figure 1 illustrates a video delivery system 10 enabled with instant-replay and time-shifted playback according to the invention. It is noted that only the parts relevant to the invention are illustrated in Figure 1, and that the units enabling unrelated functionality are not shown for system 10. In principle, system 10 offers broadcast television over Internet Protocol (IP), including IP multicast and unicast, and offers subscribers control for channel browsing, selection and retrieval of the selected program (interactive program guide capabilities).

For large amounts of data, including point-to-multipoint (P2P) video transmissions, IP multicast is more efficient than normal Internet unicast transmissions because a server can broadcast the multimedia content to many recipients simultaneously. Unlike traditional Internet traffic that requires separate connections for each source-destination pair, IP multicasting allows many recipients to share the same source. This means that just one set of packets is required to be transmitted for all the destinations, and that the clients join the multicast stream upon request.

As well known, the subscriber premise equipment SPE (or subscriber terminal, or user terminal, or end-client) denoted with **2, 2ⁿ, 2^{o}, 2^{ir},** may include a set-top box (STB) **21, 21", 21°, 21^{ir},** and a TV monitor **22. 22ⁿ, 22^{o}, 22^{ir},** respectively, for enabling a subscriber to view and listen to the multimedia content streamed from system **10.** The subscriber terminal is not limited to the examples provided in Figure 1; as readily understood it may include a personal computer, laptop, notebook, personal assistant, etc. As also known, subscribers use a remote control (not shown) or keyboard/keypad/mouse for interfacing with the interactive program guide (IPG) displayed on the television or computer monitor; the interactive nature of the IPG gives a subscriber control over many aspects of the broadcast system, such as channel browsing, followed eventually by selecting and retrieving the content of the selected program.

Also shown on Figure 1 is a head end **1** that retrieves multimedia/ television/Internet signals broadcast from various sources such as satellites, and converts these signals to one or more IP multicast transport streams which are then sent out to server **10** over a provider network, illustrated in Figure 1 as broadcast multimedia content streams **3.** The live signal is broadcast by server **10** to the SPE's **2, ..21ⁿ** etc. over any medium (IP, ADSL, ATM, etc.).

Relevant to this invention, server **10** includes a time shift unit **20,** and an instant reply unit **25,** that provide server **10** with additional functionality by implementing instant-replay and time-shifted playback, for enabling the subscribers with a VCR-like functionality for any multimedia (TV) broadcast program.

Time-shift unit **20** includes a time-shift controller **11,** a time-shift transmit unit **15** and a circular buffer **14.** Time-shift transmit unit **15** includes a plurality *n* of senders **5, 5¹, .. 5ⁿ,** for transmitting predefined time shifted variants of the live stream to the SPE's **2, 2¹,** .. **2".** The circular buffer **14** caches continuously the live stream. Each sender is associated with an access point **P, P1,... Pⁿ** that enables a certain time delay D1 to Dn in rendering the content to the users by sending from a different offset within the circular buffer. The number of senders **5** is a design parameter and is only limited by the amount of memory, CPU and bandwidth available at the server. A STE can choose to view the original live broadcast with any of the available time-shifts (delay) D. For example, in the case that three buffers are used, D1 could be 5 minutes, D2, 15 minutes and D3, 30 minutes. As indicated above, D could have any value desired, memory limited. A variation of this ability is micro time-shifts of 30 seconds, 1 minute, 2 minutes, and 5 minutes. Figure 1 also illustrates an STE **21^{o}** that elected to view the real-time live broadcast with no delay.

In operation, time-shift unit **20** receives a "live" broadcast through a respective medium and continuously caches copies of the live stream in its circular buffer **14.** The senders transmit the delayed versions using preferably IP multicast, so that more than one SPE unit can view the same delayed version of the live stream. Upon receipt of a request message **4,** let's say from subscriber terminal **21",** demanding a transmission delayed by Dn, controller **11** identifies the buffer start point **Pⁿ** for the version time-shifted by Dn, and provides the respective terminal with the address where this stream can be joined. This enables STB **21ⁿ** to playback the stream with the respective delay Dn by just joining the appropriate multicast stream (transport medium chosen in this example).

Alternatively, the system may be configured so that the client **2ⁿ** can infer what multicast address each of the delayed streams is on, and join the respective stream so that the interaction with controller **11** is optional.

Since it is implemented in the equipment at the edge of the provider's network, the instant replay system of the invention requires fewer resources and is more practical to do in memory, yet is still quite powerful. This configuration of the video delivery system **10** allows subscribers to replay the content of interest by jumping to and from a time-delayed version, to take breaks for answering the phone, and to activate a VCR, etc. without missing the show. It also allows the user to catch-up with real-time during commercial breaks, which are usually even multiples of 30 seconds.

Performance of the time-shifting mechanism described above can be optimized using techniques described in the co-pending US Patent Application SN N/A entitled: "Client Side PID Translation" (Furlong et al.), filed on November 2, 2005. This co-pending Patent Application describes a mechanism whereby program guide and system information is send to subscriber terminals before the respective content. The SPE is provided with an input buffer for storing the input data until a milestone is detected and a multimedia content stream and a system information controller that detects the milestones in the stream. In this way, the decoder does not need to establish the correspondence between the PID of the elementary streams to re-assemble the respective stream upon receipt of the content, since this is performed in advance upon detector initialization. n the case time-shifting is used, the advance knowledge of the decoding information for the respective stream allows the subscriber to perform the time-shift faster than with traditional SPE's.

Figure 1 also shows an instant replay unit **25** that enables the subscribers with instant replay capabilities. Unit **25** includes an instant reply controller **12,** a plurality of arbitrary buffers **13, 13'** and an instant reply transmit unit **30.** Buffers **13, 13'** are sized for specific, predetermined amount of information, so that each can store up to Tn seconds of content. For example, buffer **13** may be sized to keep a snap shot of 10 seconds, buffer **13'** may be sized for snap shots of 20 seconds, etc. In this specification, the term "length T" refers to the playback time of the instant replay sequence.

It is to be noted that any number of such buffers may be provided, their number being limited by the memory availability. Instant reply transmit unit **30** comprises senders **6, 6'** that provide the instant reply content to the SPE's **2^{ir};** each sender is associated with a respective buffer **13, 13'.**

In operation, when an end-user wants to perform an instant replay function, he/she initiates this event (e.g. a key press on the channel selector), as shown by instant reply request **7.** This can be for example implemented using the RTSP (real time streaming protocol), which is a client-server multimedia presentation control protocol, designed to address the needs for efficient delivery of streamed multimedia over IP networks. Once the user initiates the instant replay, controller **12** takes a snapshot copy **26** of the "live" stream from the circular buffer **14** to a certain arbitrary buffer **13** of Tn seconds, and directs a user pointer to it.

At this point sender **6** in this example, commences sending buffer **13** in a continuous loop of 10 seconds (T=10 seconds in this example). With RTSP optional trick play support, the user can pause, fast-forward and rewind the sender within the T second buffer. Once done with the instant-replay, the user may rejoin the live stream. The instant replay stream is sent to STB **21^{ir}** preferably as a unicast transmission, since only user **2^{ir}** wishes the instant replay at that particular moment.

Performance of the instant replay mechanism described above can be optimized using techniques described in a co-pending US Patent Application SN: N/A (Parker et al) entitled "Milestone Synchronization in Broadcast Multimedia Streams" filed on March 28, 2005. This co-pending Patent Application describes a mechanism whereby the beginning of a circular buffer contains the beginning of a GOP sequence (i.e. an MPEG2 I-Frame). This involves flushing data until a GOP sequence is found and keeping track of the PAT/PMT frames separately. As the circular buffers fills-in, the server keeps notes of where the GOP sequences start and end. When a join request arrives from a STE, the requester is added to a list of clients, and the time of request arrival is associated with the closest GOP start in the buffer. Since requests come in randomly, each client is at a specific (different) packet in the buffer. The same circular buffer **14** used for implementing instant reply capabilities may be also used for synchronizing the clients.

## Claims

1. A video delivery server (10) for distributing multimedia content streams to a plurality of subscriber premise equipment, SPE, units (2, 2ⁿ, 2⁰, 2^{ir}), where SPE units select and join multimedia content streams using interactive program guide capabilities at said video delivery server (10), comprising:
a time shift unit (20) comprising:
a circular buffer (14) configured for storing multimedia content received in a live multimedia content stream;
a first sender configured for bypassing said circular buffer and multicasting said live multimedia content stream directly to said SPE units (2, 2ⁿ, 2⁰, 2^{ir});
a second sender (5, 5¹, 5ⁿ) configured for accessing said multimedia content from a specific position from a predetermined number of positions (P, P¹, Pⁿ) in said circular buffer, and multicasting a time shifted variant of said live multimedia content stream to said SPE units (2, 2ⁿ, 2⁰, 2^{ir});
wherein each specific position (P, P¹, Pⁿ) in said circular buffer (14) confers a predetermined time-shift for a variant of said live multimedia content stream with respect to said live multimedia content stream;
wherein the video delivery server (10) further comprises:
an instant replay unit (25) for enabling an SPE unit (2, 2ⁿ, 2⁰, 2^{ir}) with instant replay functionality comprising:
a replay buffer (13, 13') configured for storing a length T of multimedia content;
an instant replay controller (12) configured for receiving an instant replay request (7) from said SPE unit (2, 2ⁿ, 2⁰, 2^{ir}), taking a snapshot copy (26) of length T of the multimedia content from said circular buffer (14) to said replay buffer (13, 13') and directing a pointer associated with said SPE unit (2, 2ⁿ, 2⁰, 2^{ir}) to said replay buffer (13, 13'); and
a sender (6, 6') associated with said replay buffer (13, 13') configured for transmitting said snapshot copy to said SPE unit (2, 2ⁿ, 2⁰, 2^{ir}) from said replay buffer (13, 13').

2. The video delivery server of claim 1, further comprising a time-shift controller (11) for receiving a time-shift request message (4) from said SPE unit (2, 2ⁿ, 2⁰, 2^{ir}) and providing said SPE unit with a multicast address for said time-shifted variant of said live multimedia content stream.

3. The video delivery server of claim 1, further comprising additional senders (5, 5¹, 5ⁿ) for accessing said multimedia content from different specific positions (P, P¹, Pⁿ) in said circular buffer (14) for providing different predetermined time-shifts (D¹, D², Dⁿ), each said additional sender (5, 5¹, 5ⁿ) multicasting a respective time-shifted variant of said live multimedia content stream to said SPE units (2, 2ⁿ, 2⁰, 2^{ir}),
wherein a SPE unit (2, 2ⁿ, 2⁰, 2^{ir}) selects to join either one of said live multimedia content stream and said time-shifted variants of said multimedia content stream for playback of the content in said live stream directly or with a respective predetermined time-shift (D¹, D², Dⁿ).

4. The video delivery server of claim 3, further comprising a time-shift controller (11) for receiving a request message (4) from said SPE unit (2, 2ⁿ, 2⁰, 2^{ir}) specifying a preferred time-shift (D¹, D², Dⁿ) and providing said SPE unit (2, 2ⁿ, 2⁰, 2^{ir}) with a respective address enabling said SPE unit (2, 2ⁿ, 2⁰, 2^{ir}) to join one of said time-shifted variants of said live multimedia content stream that provides said preferred time-shift (D¹, D², Dⁿ).

5. The video delivery server of claim 3, wherein said time-shifts (D¹, D², Dⁿ) are in the order of tenths of minutes.

6. The video delivery server of claim 3, wherein said time-shifts (D¹, D², Dⁿ) are in the order of minutes.

7. The video delivery server of claim 1 wherein said sender (6, 6') associated with said replay buffer (13, 13') transmits said snapshot copy using a unicast transmission protocol.

8. The video delivery server of claim 1, wherein said length T is in the order of tens of seconds.

9. The video delivery server of claim 1, wherein said instant replay request (7) is implemented using the real time streaming protocol, RTSP.

10. The video delivery server of claim 1 wherein said instant replay unit (25) comprises:
a plurality of replay buffers (13, 13'), each for storing a distinct length Tn of multimedia content; an instant replay controller (12) for receiving an instant replay request (7) from said SPE unit (2, 2ⁿ, 2⁰, 2^{ir}) specifying a preferred length T of an instant replay sequence, taking a snapshot copy of length T of the multimedia content from said circular buffer (14) to one of said replay buffers (13, 13') according to length T; and
a sender (6, 6') associated with said replay buffer (13, 13') selected based
on length T for transmitting said snapshot copy of length T to said SPE unit (2, 2ⁿ, 2⁰, 2^{ir}) from said replay buffer (13, 13').

11. A method for distributing multimedia content streams to a plurality of subscriber premise equipment, SPE, units (2, 2ⁿ, 2⁰, 2^{ir r}), where SPE units select and join multimedia content streams using interactive program guide capabilities at said server (10), the method comprising:
continuously storing multimedia content received in a live multimedia content stream into a circular buffer (14);
identifying a specific access point from a predetermined number of access positions (P, P¹, Pⁿ) in said circular buffer (14) that provides a predetermined time-shift (D¹, D², Dⁿ) of multimedia content in said circular buffer (14) from the access point of multimedia content in said live multimedia content stream; and
accessing said multimedia content from said specific access point in said circular buffer (14), and multicasting a time-shifted variant of said live multimedia content stream to said plurality of SPE units (2, 2ⁿ, 2⁰, 2^{ir}) from said specific access point;
wherein the method further comprises:
receiving an instant replay request (7) from one of said plurality of SPE units (2, 2ⁿ, 2⁰, 2^{ir});
taking a snapshot copy of length T of the multimedia content from said circular buffer (14) to a replay buffer (13, 13') and directing a pointer associated with said one of said plurality of SPE units (2, 2ⁿ, 2⁰, 2^{ir}) to said replay buffer (13, 13'); and
transmitting said snapshot copy to said one of said plurality of SPE units (2¹, 2ⁿ, 2⁰, 2^{ir}) from said replay buffer (13, 13').

12. The method of claim 11, further comprising bypassing said circular buffer and multicasting said live multimedia content stream directly to said SPE units (2, 2ⁿ, 2⁰, 2^{ir}).

13. The method of claim 11, further comprising receiving a time-shift request message (4) from a SPE unit (2, 2ⁿ, 2⁰, 2^{ir}) and providing said SPE unit (2, 2ⁿ, 2⁰, 2^{ir}) with a multicast address for said time-shifted variant of said live multimedia content stream.

14. The method of claim 11, further comprising:
identifying additional specific access points (P, P¹, Pⁿ) in said circular buffer (14) for additional predetermined time-shifts (D¹, D², Dⁿ) of multimedia content in said circular buffer (14) from the access point of multimedia content in said live multimedia content stream; and
accessing said multimedia content from each said specific access point (P, P¹, Pⁿ) in said circular buffer (14), and multicasting additional time-shifted variants of said live multimedia content stream to said SPE units (2, 2ⁿ, 2⁰, 2^{ir}) from said additional specific access points.

15. The method of claim 11, wherein said snapshot copy is provided to said SPE unit (2¹, 2ⁿ, 2⁰, 2^{ir}) using a unicast transmission protocol.

16. The method of claim 11, further comprising:
providing a plurality of replay buffers (13, 13') of various lengths Tn;
receiving an instant replay request (7) from said SPE unit (2, 2ⁿ, 2⁰, 2^{ir}),
wherein said instant replay request specifies a length T for instant replay of selected content of interest;
identifying a certain replay buffer (13, 13') from said plurality of replay buffers that can store content of said length T;
taking a snapshot copy of length T of the multimedia content from said circular buffer (14) to said certain replay buffer (13, 13') and directing a pointer associated with said SPE unit (2, 2ⁿ, 2⁰, 2^{ir}) to said certain replay buffer (13, 13'); and
transmitting said instant replay content of interest to said SPE unit (2, 2ⁿ, 2⁰, 2^{ir}).

17. The method of claim 16, further comprising performing trick play operations on said instant replay content of interest in said certain replay buffer (13, 13').

## Patentansprüche

1. Video-Lieferungs-Server (10) zum Verteilen von Multimediainhalt-Streams an eine Vielzahl von Teilnehmerendgeräten in Kundenräumlichkeiten, SPE-Einheiten (2, 2ⁿ, 2⁰, 2^{ir}), wobei die SPE-Einheiten Multimediainhalt-Streams unter Verwenden interaktiver Programmführerkapazitäten auf besagtem Video-Lieferungs-Server (10) auswählen und sich mit ihnen verbinden,
umfassend:
eine Zeitverschiebungseinheit (20), umfassend:
einen Ringpuffer (14), der konfiguriert ist zum Speichern von Multimediainhalt, der in einem Multimediainhalt-Live-Stream empfangen wird;
einen ersten Sender, der konfiguriert ist zum Umleiten besagten Ringpuffers und zum Multicasting besagten Multimediainhalt-Live-Streams direkt an besagte SPE-Einheiten (2, 2ⁿ, 2⁰, 2^{ir});
einen zweiten Sender (5, 5¹, 5ⁿ), der konfiguriert ist zum Zugreifen auf besagten Multimediainhalt von einer spezifischen Position von einer vorbestimmten Anzahl von Positionen (P, P¹, Pⁿ) in besagtem Ringpuffer, und zum Multicasting einer zeitverschobenen Variante von besagtem Multimediainhalt-Live-Stream an besagte SPE-Einheiten (2, 2ⁿ, 2⁰, 2^{ir});
wobei jede spezifische Position (P, P¹, Pⁿ) in besagtem Ringpuffer (14) eine vorbestimmte Zeitverschiebung für eine Variante besagten Multimediainhalt-Live-Streams erteilt in Hinblick auf besagten Multimediainhalt-Live-Stream;
wobei der Video-Lieferungs-Server (10) weiterhin umfasst:
eine sofortige Wiedergabeeinheit (25) zum Ermöglichen einer SPE-Einheit (2, 2ⁿ, 2°, 2") einer sofortigen Wiedergabefunktionalität, umfassend:
einen Wiedergabepuffer (13, 13'), der konfiguriert ist zum Speichern einer Länge T von Multimediainhalt;
einen sofortigen Wiedergabe-Controller (12), der konfiguriert ist zum Empfangen einer sofortigen Wiedergabeanforderung (7) von besagter SPE-Einheit (2, 2ⁿ, 2⁰, 2^{ir}), zum Übertragen einer Snapshot-Kopie (26) der Länge T des Multimediainhalts von besagtem Ringpuffer (14) auf besagten Wiedergabepuffer (13, 13') und zum Leiten eines mit besagter SPE-Einheit (2, 2ⁿ, 2⁰, 2^{ir}) verbundenen Pointers zu besagtem Wiedergabepuffer (13, 13'); und
einen Sender (6, 6'), der mit besagtem Wiedergabepuffer (13, 13') verbunden ist, der konfiguriert ist zum Übertragen besagter Snapshot-Kopie auf besagte SPE-Einheit (2, 2ⁿ, 2⁰, 2^{ir}) von besagtem Wiedergabepuffer (13, 13').

2. Video-Lieferungs-Server nach Anspruch 1, weiterhin umfassend einen Zeitverschiebungs-Controller (11) zum Empfangen einer Zeitverschiebungs-Anforderungsnachricht (4) von besagter SPE-Einheit (2, 2ⁿ, 2⁰, 2^{ir}) und Bereitstellen für besagte SPE-Einheit einer Multicast-Adresse für besagte zeitverschobene Variante besagten Multimediainhalt-Live-Streams.

3. Video-Lieferungs-Server nach Anspruch 1, weiterhin umfassend zusätzliche Sender (5, 5¹, 5ⁿ) zum Zugreifen auf besagten Multimediainhalt von verschiedenen spezifischen Positionen (P, P¹, Pⁿ) in besagtem Ringpuffer (14) aus zum Bereitstellen verschiedener vorbestimmter Zeitverschiebungen (D¹, D², Dⁿ), wobei jeder besagte zusätzliche Sender (5, 5¹, 5ⁿ) ein Multicasting durchführt für eine entsprechende zeitverschobene Variante von besagtem Multimediainhalt-Live-Stream zu besagten SPE-Einheiten (2, 2ⁿ, 2⁰, 2^{ir}),
wobei eine SPE-Einheit (2, 2ⁿ, 2⁰, 2^{ir}) auswählt, sich entweder mit einem aus besagtem Multimediainhalt-Live-Stream und besagten zeitverschobenen Varianten von besagtem Multimediainhalt-Stream zu verbinden zum direkten Abspielen des Inhalts in besagtem Live-Stream oder mit einer entsprechenden vorbestimmten Zeitverschiebung (D¹, D², Dⁿ).

4. Video-Lieferungs-Server nach Anspruch 3, weiterhin umfassend einen Zeitverschiebungs-Controller (11) zum Empfangen einer Anforderungsnachricht (4) von besagter SPE-Einheit (2, 2ⁿ, 2⁰, 2^{ir}) unter Spezifikation einer bevorzugten Zeitverschiebung (D¹, D², Dⁿ) und Bereitstellen für besagte SPE-Einheit (2, 2ⁿ, 2⁰, 2^{ir}) einer entsprechenden Adresse, um besagter SPE-Einheit (2, 2ⁿ, 2⁰, 2^{ir}) zu ermöglichen, sich mit einer der besagten zeitverschobenen Varianten besagten Multimediainhalt-Live-Streams zu verbinden, der besagten bevorzugte Zeitverschiebung (D¹, D², Dⁿ) bereitstellt.

5. Video-Lieferungs-Server nach Anspruch 3, wobei besagte Zeitverschiebungen (D¹, D², Dⁿ) im Bereich von Zehntelminuten liegen.

6. Video-Lieferungs-Server nach Anspruch 3, wobei besagte Zeitverschiebungen (D¹, D², Dⁿ) im Bereich von Minuten liegen.

7. Video-Lieferungs-Server nach Anspruch 1, wobei besagter Sender (6, 6'), der mit besagtem Wiedergabepuffer (13, 13') verbunden ist, besagte Snapshot-Kopie unter Verwenden eines Unicast-Übertragungsprotokolls sendet.

8. Video-Lieferungs-Server nach Anspruch 1, wobei besagte Länge T im Bereich von Zehntelsekunden liegt.

9. Video-Lieferungs-Server nach Anspruch 1, wobei besagte sofortige Wiedergabeanforderung (7) implementiert wird unter Verwenden des Real-Time Streaming Protocols, RTSP.

10. Video-Lieferungs-Server nach Anspruch 1, wobei besagte sofortige Wiedergabeeinheit (25) umfasst:
eine Vielzahl von Wiedergabepuffern (13, 13'), jeder zum Speichern einer unterschiedlichen Länge Tn von Multimediainhalt; einen sofortigen Wiedergabe-Controller (12) zum Empfangen einer sofortigen Wiedergabeanforderung (7) von besagter SPE-Einheit (2, 2ⁿ, 2°, 2^{ir}) unter Spezifizieren einer bevorzugten Länge T einer sofortigen Wiedergabesequenz, Übertragen einer Snapshot-Kopie einer Länge T des Multimediainhalts von besagtem Ringpuffer (14) auf einen besagter Wiedergabepuffer (13, 13') gemäß der Länge T; und
einen Sender (6, 6'), der mit besagtem Wiedergabepuffer (13, 13') verbunden ist, der ausgewählt wird auf Grundlage der Länge T zum Übertragen besagter Snapshot-Kopie der Länge T auf besagte SPE-Einheit (2, 2ⁿ, 2⁰, 2^{ir}) von besagtem Wiedergabepuffer (13, 13').

11. Verfahren zum Verteilen von Multimediainhalt-Streams an eine Vielzahl von Teilnehmerendgeräten in Kundenräumlichkeiten, SPEs, (2, 2ⁿ, 2⁰, 2^{ir}) wobei die SPE-Einheiten Multimediainhalt-Streams unter Verwenden interaktiver Programmführerkapazitäten auf besagtem Server (10) auswählen und sich damit verbinden, wobei das Verfahren umfasst:
kontinuierliche Speicherung von Multimediainhalt, der in einem Multimediainhalt-Live-Stream empfangen wird, in einem Ringpuffer (14);
Identifizieren eines spezifischen Zugriffspunkts aus einer vorbestimmten Anzahl von Zugriffspunkten (P, P¹, Pⁿ) in besagtem Ringpuffer (14), der eine vorbestimmte Zeitverschiebung (D¹, D², Dⁿ) eines Multimediainhalts in besagtem Ringpuffer (14) bietet von dem Zugriffspunkt des Multimediainhalts in besagtem Multimediainhalt-Live-Stream; und
Zugreifen auf besagten Multimediainhalt von besagtem spezifischen Zugriffspunkt in besagtem Ringpuffer (14) aus und Multicasting einer zeitverschobenen Variante von besagtem Multimediainhalt-Live-Stream zu besagter Vielzahl von SPE-Einheiten (2, 2ⁿ, 2⁰, 2^{ir}) von besagtem spezifischen Zugriffspunkt aus; wobei das Verfahren weiterhin umfasst:
Empfangen einer sofortigen Wiedergabeanforderung (7) von einer besagter Vielzahl von SPE-Einheiten (2, 2ⁿ, 2⁰, 2^{ir});
Übertragen einer Snapshot-Kopie der Länge T des Multimediainhalts aus besagtem Ringpuffer (14) auf einen Wiedergabepuffer (13, 13') und Leiten eines mit besagter Vielzahl von PSE-Einheiten (2, 2ⁿ, 2⁰, 2^{ir}) verbundenen Pointers zu besagtem Wiedergabepuffer (13, 13'); und
Übertragen besagter Snapshot-Kopie auf besagte eine von besagter Vielzahl von SPE-Einheiten (2, 2ⁿ, 2⁰, 2^{ir}) von besagtem Wiedergabepuffer (13, 13').

12. Verfahren nach Anspruch 11, weiterhin umfassend das Umleiten besagten Ringpuffers und Multicasting besagten Multimediainhalt-Live-Streams direkt zu besagten SPE-Einheiten (2, 2ⁿ, 2⁰, 2^{ir}).

13. Verfahren nach Anspruch 11, weiterhin umfassend das Empfangen einer Zeitverschiebungs-Anforderungsnachricht (4) von einer SPE-Einheit (2, 2ⁿ, 2⁰, 2^{ir}) und Bereitstellen für besagte SPE-Einheit (2, 2ⁿ, 2⁰, 2^{ir}) einer Multicast-Adresse für besagte zeitverschobene Variante besagten Multimediainhalt-Live-Streams.

14. Verfahren nach Anspruch 11, weiterhin umfassend:
Identifizieren zusätzlicher spezifischer Zugriffspunkte (P, P¹, Pⁿ) in besagtem Ringpuffer (14) für zusätzliche vorbestimmte Zeitverschiebungen (D¹, D², Dⁿ) von Multimediainhalt in besagtem Ringpuffer (14) von dem Zugriffspunkt des Multimediainhalts in besagtem Multimediainhalt-Live-Stream; und
Zugreifen auf besagten Multimediainhalt von besagtem spezifischem Zugriffspunkt (P, P¹, Pⁿ) in besagtem Ringpuffer (14), und Multicasting zusätzlicher zeitverschobener Varianten von besagtem Multimediainhalt-Live-Stream auf besagte SPE-Einheiten (2, 2ⁿ, 2⁰, 2^{ir}) von besagten zusätzlichen spezifischen Zugriffspunkten.

15. erfahren nach Anspruch 11, wobei besagte Snapshot-Kopie besagter SPE-Einheit (2, 2ⁿ, 2⁰, 2^{ir}) bereitgestellt wird unter Verwenden eines Unicast-Übertragungsprotokolls.

16. Verfahren nach Anspruch 11, weiterhin umfassend:
Bereitstellen einer Vielzahl von Wiedergabepuffern (13, 13') von unterschiedlicher Länge Tn;
Empfangen einer sofortigen Wiedergabeanforderung (7) von besagter SPE-Einheit (2 2ⁿ, 2⁰, 2^{ir}),
wobei besagte sofortige Wiedergabeanforderung eine Länge T für die sofortige Wiedergabe eines ausgewählten interessierenden Inhalts spezifiziert;
Identifizieren eines bestimmten Wiedergabepuffers (13, 13') aus besagter Vielzahl von Wiedergabepuffern, die Inhalt besagter Länge T speichern können;
Übertragen einer Snapshot-Kopie der Länge T des Multimedia-Inhalts aus besagtem Ringpuffer (14) auf besagten bestimmten Wiedergabepuffer (13, 13') und Leiten eines mit besagter PSE-Einheit (2, 2ⁿ, 2⁰, 2^{ir}) verbundenen Pointers zu besagtem bestimmten Wiedergabepuffer (13, 13'); und
Senden besagten interessierenden sofortigen Wiedergabeinhalts an besagte PSE-Einheit (2, 2ⁿ, 2⁰, 2^{ir}).

17. Verfahren nach Anspruch 16, weiterhin umfassend das Durchführen von Trick-Play-Operationen an besagtem interessierenden sofortigen Wiedergabeinhalt in besagtem bestimmten Wiedergabepuffer (13, 13').

## Revendications

1. Serveur de distribution vidéo (10) pour distribuer des flux de contenu multimédia à une pluralité d'unités d'équipement de locaux d'abonné SPE (2, 2ⁿ, 2⁰, 2^{ir}), où des unités SPE sélectionnent et assemblent des flux de contenu multimédia en utilisant des capacités de guide de programme interactif au niveau dudit serveur de distribution vidéo (10),
comprenant :
une unité de décalage dans le temps (20) comprenant :
une mémoire tampon circulaire (14) configurée pour stocker un contenu multimédia reçu dans un flux de contenu multimédia en direct ;
un premier dispositif de transmission configuré pour contourner ladite mémoire tampon circulaire et multidiffuser ledit flux de contenu multimédia en direct directement auxdites unités SPE (2, 2ⁿ, 2⁰, 2^{ir}) ;
un deuxième dispositif de transmission (5, 5¹, 5ⁿ) configuré pour accéder audit contenu multimédia à partir d'une position spécifique parmi un nombre prédéterminé de positions (P, P¹, Pⁿ) dans ladite mémoire tampon circulaire, et multidiffuser une variante décalée dans le temps dudit flux de contenu multimédia en direct auxdites unités SPE (2, 2ⁿ, 2⁰, 2^{ir});
dans lequel chaque position spécifique (P, P¹, Pⁿ) dans ladite mémoire tampon circulaire (14) confère un décalage dans le temps prédéterminé pour une variante dudit flux de contenu multimédia en direct par rapport audit flux de contenu multimédia en direct ;
dans lequel le serveur de distribution vidéo (10) comprend en outre :
une unité de reprise instantanée (25) pour activer une unité SPE (2, 2ⁿ, 2⁰, 2^{ir}) ayant une fonctionnalité de reprise instantanée comprenant :
une mémoire tampon de reprise (13, 13') configurée pour stocker une durée T de contenu multimédia ;
un contrôleur de reprise instantanée (12) configuré pour recevoir une demande de reprise instantanée (7) provenant de ladite unité SPE (2, 2ⁿ, 2⁰, 2^{ir}), réaliser une copie instantanée (26) d'une durée T du contenu multimédia entre ladite mémoire tampon circulaire (14) et ladite mémoire tampon de reprise (13, 13') et diriger un pointeur associé à ladite unité SPE (2, 2ⁿ, 2⁰, 2^{ir}) vers ladite mémoire tampon de reprise (13, 13') ; et
un dispositif de transmission (6, 6') associé à ladite mémoire tampon de reprise (13, 13') configuré pour transmettre ladite copie instantanée à ladite unité SPE (2, 2ⁿ, 2⁰, 2^{ir}) à partir de ladite mémoire tampon de reprise (13, 13').

2. Serveur de distribution vidéo selon la revendication 1, comprenant en outre un contrôleur de décalage dans le temps (11) pour recevoir un message de demande de décalage dans le temps (4) provenant de ladite unité SPE (2, 2ⁿ, 2⁰, 2^{ir}) et doter ladite unité SPE d'une adresse de multidiffusion pour ladite variante décalée dans le temps dudit flux de contenu multimédia en direct.

3. Serveur de distribution vidéo selon la revendication 1, comprenant en outre des dispositifs de transmission supplémentaires (5, 5¹, 5ⁿ) pour accéder audit contenu multimédia à partir de différentes positions spécifiques (P, P¹, Pⁿ) dans ladite mémoire tampon circulaire (14) pour fournir différents décalages dans le temps prédéterminés (D¹, D², Dⁿ), chacun desdits dispositifs de transmission supplémentaires (5, 5¹, 5ⁿ) multidiffusant une variante décalée dans le temps respective dudit flux de contenu multimédia en direct auxdites unités SPE (2, 2ⁿ, 2⁰, 2^{ir}),
dans lequel une unité SPE (2, 2ⁿ, 2⁰, 2^{ir}) choisit d'assembler l'un quelconque desdits flux de contenu multimédia en direct et desdites variantes décalées dans le temps dudit flux de contenu multimédia pour la lecture du contenu dans ledit flux en direct directement ou avec un décalage dans le temps prédéterminé respectif (D¹, D², Dⁿ).

4. Serveur de distribution vidéo selon la revendication 3, comprenant en outre un contrôleur de décalage dans le temps (11) pour recevoir un message de demande (4) provenant de ladite unité SPE (2, 2ⁿ, 2⁰, 2^{ir}) spécifiant un décalage dans le temps préféré (D¹, D², Dⁿ) et doter ladite unité SPE (2, 2ⁿ, 2⁰, 2^{ir}) d'une adresse respective permettant à ladite unité SPE (2, 2ⁿ, 2⁰, 2^{ir}) d'assembler une desdites variantes décalées dans le temps dudit flux de contenu multimédia en direct qui fournit ledit décalage dans le temps préféré (D¹, D², Dⁿ).

5. Serveur de distribution vidéo selon la revendication 3, dans lequel lesdits décalages dans le temps (D¹, D², Dⁿ) sont de l'ordre du dixième de minutes.

6. Serveur de distribution vidéo selon la revendication 3, dans lequel lesdits décalages dans le temps (D¹, D², Dⁿ) sont de l'ordre de la minute.

7. Serveur de distribution vidéo selon la revendication 1 dans lequel ledit dispositif de transmission (6, 6') associé à ladite mémoire tampon de reprise (13, 13') transmet ladite copie instantanée en utilisant un protocole de transmission à destination unique.

8. Serveur de distribution vidéo selon la revendication 1, dans lequel ladite durée T est de l'ordre du dixième de secondes.

9. Serveur de distribution vidéo selon la revendication 1, dans lequel ladite demande de reprise instantanée (7) est mise en oeuvre en utilisant le protocole de diffusion en continu en temps réel, RTSP.

10. Serveur de distribution vidéo selon la revendication 1 dans lequel ladite unité de reprise instantanée (25) comprend :
une pluralité de mémoires tampons de reprise (13, 13'), chacune pour stocker une durée distincte Tn de contenu multimédia ; un contrôleur de reprise instantanée (12) pour recevoir une demande de reprise instantanée (7) provenant de ladite unité SPE (2, 2ⁿ, 2⁰, 2^{ir}) spécifiant une durée préférée T d'une séquence de reprise instantanée, réaliser une copie instantanée d'une durée T du contenu multimédia entre ladite mémoire tampon circulaire (14) et une desdites mémoires tampons de reprise (13, 13') conformément à la durée T ; et
un dispositif de transmission (6, 6') associé à ladite mémoire tampon de reprise (13, 13') sélectionnée sur la base d'une durée T pour transmettre ladite copie instantanée de durée T à ladite unité SPE (2, 2ⁿ, 2⁰, 2^{ir}) à partir de ladite mémoire tampon de reprise (13, 13').

11. Procédé de distribution de flux de contenu multimédia à une pluralité d'unités d'équipement de locaux d'abonné SPE (2, 2ⁿ, 2⁰, 2^{ir r}), où des unités SPE sélectionnent et assemblent des flux de contenu multimédia en utilisant des capacités de guide de programme interactif au niveau dudit serveur (10), le procédé comprenant les étapes suivantes :
stocker en continu un contenu multimédia reçu dans un flux de contenu multimédia en direct à l'intérieur d'une mémoire tampon circulaire (14) ;
identifier un point d'accès spécifique parmi un nombre prédéterminé de positions d'accès (P, P¹, Pⁿ) dans ladite mémoire tampon circulaire (14) qui fournit un décalage dans le temps prédéterminé (D¹, D², Dⁿ) de contenu multimédia dans ladite mémoire tampon circulaire (14) à partir du point d'accès de contenu multimédia dans ledit flux de contenu multimédia en direct ; et
accéder audit contenu multimédia à partir dudit point d'accès spécifique dans ladite mémoire tampon circulaire (14), et multidiffuser une variante décalée dans le temps dudit flux de contenu multimédia en direct à ladite pluralité d'unités SPE (2, 2ⁿ, 2⁰, 2^{ir}) à partir dudit point d'accès spécifique ;
le procédé comprenant en outre les étapes suivantes :
recevoir une demande de reprise instantanée (7) à partir d'une unité parmi ladite pluralité d'unités SPE (2, 2ⁿ, 2⁰, 2^{ir}) ;
réaliser une copie instantanée d'une durée T du contenu multimédia entre ladite mémoire tampon circulaire (14) et une mémoire tampon de reprise (13, 13') et diriger un pointeur associé à ladite unité parmi ladite pluralité d'unités SPE (2, 2ⁿ, 2⁰, 2^{ir}) vers ladite mémoire tampon de reprise (13, 13') ; et
transmettre ladite copie instantanée à ladite unité parmi ladite pluralité d'unités SPE (2¹, 2ⁿ, 2⁰, 2^{ir}) à partir de ladite mémoire tampon de reprise (13, 13').

12. Procédé selon la revendication 11, consistant en outre à contourner ladite mémoire tampon circulaire et à multidiffuser ledit flux de contenu multimédia en direct directement auxdites unités SPE (2, 2ⁿ, 2⁰, 2^{ir}).

13. Procédé selon la revendication 11, consistant en outre à recevoir un message de demande de décalage dans le temps (4) à partir d'une unité SPE (2, 2ⁿ, 2⁰, 2^{ir}) et à doter ladite unité SPE (2, 2ⁿ, 2⁰, 2^{ir}) d'une adresse de multidiffusion pour ladite variante décalée dans le temps dudit flux de contenu multimédia en direct.

14. Procédé selon la revendication 11, comprenant en outre les étapes suivantes :
identifier des points d'accès spécifiques supplémentaires (P, P¹, Pⁿ) dans ladite mémoire tampon circulaire (14) pour des décalages dans le temps prédéterminés supplémentaires (D¹, D², Dⁿ) de contenu multimédia dans ladite mémoire tampon circulaire (14) à partir du point d'accès de contenu multimédia dans ledit flux de contenu multimédia en direct ; et
accéder audit contenu multimédia à partir de chacun desdits points d'accès spécifiques (P, P¹, Pⁿ) dans ladite mémoire tampon circulaire (14), et multidiffuser des variantes décalées dans le temps supplémentaires dudit flux de contenu multimédia en direct auxdites unités SPE (2, 2ⁿ, 2⁰, 2^{ir}) à partir desdits points d'accès spécifiques supplémentaires ;

15. Procédé selon la revendication 11, dans lequel ladite copie instantanée est fournie à ladite unité SPE (2¹, 2ⁿ, 2°, 2^{ir}) en utilisant un protocole de transmission à destination unique.

16. Procédé selon la revendication 11, comprenant en outre les étapes suivantes :
fournir une pluralité de mémoires tampons de reprise (13, 13') de diverses durées Tn ;
recevoir une demande de reprise instantanée (7) provenant de ladite unité SPE (2, 2ⁿ, 2⁰, 2^{ir}) ;
dans lequel ladite demande de reprise instantanée spécifie une durée T pour la reprise instantanée de contenu sélectionné d'intérêt ;
identifier une certaine mémoire tampon de reprise (13, 13') parmi ladite pluralité de mémoires tampons de reprise qui peuvent stocker un contenu de ladite durée T ;
réaliser une copie instantanée d'une durée T du contenu multimédia entre ladite mémoire tampon circulaire (14) et ladite certaine mémoire tampon de reprise (13, 13') et diriger un pointeur associé à ladite unité SPE (2, 2ⁿ, 2°, 2^{ir}) vers ladite certaine mémoire tampon de reprise (13, 13') ; et
transmettre ledit contenu de reprise instantanée d'intérêt à ladite unité SPE (2, 2ⁿ, 2⁰, 2^{ir}).

17. Procédé selon la revendication 16, comprenant en outre l'exécution de fonctions spéciales sur ledit contenu de reprise instantanée d'intérêt dans ladite certaine mémoire tampon de reprise (13, 13').
